# EUROPÄISCHE PATENTSCHRIFT

(11) **EP 2 457 022 B1**
(45) Veröffentlichungstag und Bekanntmachung des Hinweises auf die Patenterteilung: **09.09.2015**
(21) Anmeldenummer: 10730806.6
(22) Anmeldetag: 15.07.2010
(51) Int. Cl.: F23H 15/00, F23N 1/00

(54) **GASVENTILEINHEIT FÜR EIN GASKOCHGERÄT**
GAS VALVE UNIT FOR A GAS COOKING DEVICE
DISPOSITIF DE VANNE À GAZ POUR UN DISPOSITIF DE CUISSON À GAZ

(30) Priorität: 24.07.2009 EP 09290591; 08.03.2010 EP 10290114
(43) Veröffentlichungstag der Anmeldung: 30.05.2012
(73) Patentinhaber: BSH Hausgeräte GmbH, 81739 München (DE)
(72) Erfinder: NAUMANN, Jörn, 77770 Durbach (DE); CADEAU, Christophe, 67100 Strasbourg (FR); CLAUSS, Stéphane, F-67140 Stotzheim (FR); EISENBERG, Alexander, F-67150 Erstein (FR)
(86) Internationale Anmeldenummer: PCT/EP2010/060179
(87) Internationale Veröffentlichungsnummer: WO 2011/009794

(56) Entgegenhaltungen:
- EP-A2- 1 640 664
- DE-A1- 10 249 938
- JP-A- 2006 010 243

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit einen Ventilkörper aufweist, in welchem Ventilkörper mindestens zwei Ventilsitze von Auf-Zu-Ventilen der Gasventileinheit ausgebildet sind, und in welchem Ventilkörper mindestens zwei Drosselstellen mit jeweils mindestens einer Drosselöffnung ausgebildet sind.

Gasventileinheiten der genannten Art sind beispielsweise in den Druckschriften EP0818655A2 und WO2004063629A1 beschrieben. Mit derartigen Gasventileinheiten kann der einem Gasbrenner eines Gaskochgeräts zugeführte Gasvolumenstrom in mehreren Stufen gesteuert werden. Dabei besitzt der Gasvolumenstrom in jeder Stufe eine reproduzierbare Größe. Der Durchflussquerschnitt der Gasventileinheit insgesamt-und damit die Größe des Gasvolumenstroms - wird eingestellt, indem bestimmte Auf-Zu-Ventile der Gasventileinheit geöffnet bzw. geschlossen werden und dadurch der Gasfluss durch bestimmte Drosselöffnungen freigegeben bzw. unterbrochen wird.

Die bekannten gattungsgemäßen Gasventileinheiten sind aufwändig ausgeführt und eignen sich ausschließlich für eine Betätigung mittels einer elektronischen Steuereinheit. Hierbei ist jedem Auf-Zu-Ventil ein Elektromagnet zugeordnet, welcher von der elektronischen Steuereinheit angesteuert wird und das jeweilige Auf-Zu-Ventil öffnet bzw. schließt.

Das Dokument EP 1 640 664 A2 beschreibt eine Steuerventilanordnung. Die Steuerventilanordnung umfasst einen Einlaß zum Empfangen eines Gasstroms, einen Auslass zum Bereitstellen des Gasstroms mit einem Gasbrenner, ein Absperrventil zum Unterbrechen des Gasstroms aus dem Einlaß, und ein mikroelektromechanisches Systems(MEMS)-Ventil, welches in Reihe mit dem Absperrventil zwischen dem Einlass und dem Auslass zum Regulieren der Gasströmung vom Einlaß mit dem Ausgang gekoppelt ist.

Das Dokument DE 102 49 938 A1 zeigt eine Ventilanordnung mit wenigstens einem Ventil, das wenigstens eine Öffnung aufweist, die mit einer Kugel verschliessbar ist. Dabei ist im Bereich eines jeden Ventils wenigstens ein Permanentmagnet positionierbar, der die innerhalb des Ventils angeordnete Kugel gegen die verschliessbare Öffnung presst oder in einem vorgebbaren Abstand davon hält.

Der vorliegenden Erfindung liegt die Aufgabe zugrunde, eine einfacher herstellbare Gasventileinheit der eingangs genannten Art zur Verfügung zu stellen.

Die Aufgabe wird von einer Gasventileinheit mit den Merkmalen des Anspruchs 1 gelöst.

Demnach wird vorgeschlagen, dass der Ventilkörper mehrere parallel zueinander angeordnete Platten aufweist, wobei eine Ventildichtplatte die Ventilsitze der Auf-Zu-Ventile bildet und in einer Drosselplatte die Drosselöffnungen der Drosselstellen angeordnet sind. Der Ventilkörper umfasst mehrere Platten, die übereinander geschichtet sind. Die aneinander anliegenden Platten sind gegeneinander derart abgedichtet, dass aus der Trennfuge zwischen zwei aneinander anliegenden Platten kein Gas austreten kann. In den Platten sind Gaskanäle in Form von Öffnungen, wie z. B. Bohrungen oder Schlitzen vorgesehen, durch die das Gas in Richtung senkrecht zu den Platten und im Fall von Schlitzen auch parallel zu der betreffenden Platte strömen kann. Erfindungsgemäß ist eine der Platten als Ventildichtplatte ausgeführt, welche die Ventilsitze der Auf-Zu-Ventile bildet. Eine weitere Platte ist als Drosselplatte aus Metall ausgeführt welche Drosselöffnungen mit einem exakt definierten Querschnitt aufweist. Eine elastische Verformbarkeit der Drosselplatte ist deshalb unerwünscht. Die Verwendung von Metall, vorzugsweise Messing oder Edelstahl, ermöglicht eine exakte Bearbeitung der Drosselplatte und eine einfache Herstellung der Drosselöffnungen. Dieser Querschnitt bestimmt den Gasvolumenstrom, welcher die Drosselstelle, zu der die Drosselöffnung gehört, durchströmt, wenn ein entsprechendes Auf-Zu-Ventil geöffnet ist.

Eine Gasdichtheit der geschlossenen Auf-Zu-Ventile ist dadurch sichergestellt, dass die Ventildichtplatte aus einem flexiblen Material, beispielsweise aus Kunststoff ausgeführt ist. Die Dichtheit des Auf-Zu-Ventils ist dabei auch bei geringen Schließkräften des Auf-Zu-Ventils gewährleistet.

Jedes Auf-Zu-Ventil weist einen Absperrkörper auf, welcher bei geschlossenem Auf-Zu-Ventil auf der Ventildichtplatte aufsitzt. Zum Öffnen des Auf-Zu-Ventils wird der Absperrkörper von der Ventildichtplatte abgehoben. Die Ventildichtplatte weist im Bereich jedes Ventilsitzes eine Öffnung auf, welche bei geschlossenem Auf-Zu-Ventil mittels des auf der Ventildichtplatte aufsitzenden Absperrkörpers verschlossen ist. Die Öffnung bildet einen Kanal von der Oberseite zur Unterseite der Ventildichtplatte und ermöglicht ein Durchströmen der Ventildichtplatte mit Gas, wenn der Absperrkörper von der Ventildichtplatte abgehoben ist. Der auf der Ventildichtplatte.aufsitzende,Absperrkörper verschließt die zugeordnete Öffnung hingegen vollständig.

Gemäß einer besonders zweckmäßigen Ausgestaltung der Erfindung sind die Absperrkörper der Auf-Zu-Ventile mittels der Kraft mindestens eines Permanentmagnets bewegbar. Der Permanentmagnet ist vorzugsweise Bestandteil der Gasventileinheit und wird beispielsweise manuell von einer Bedienperson, oder mittels eines Elektromotors relativ zu den Absperrkörpern bewegt. Die Bewegung des Permanentmagnets erfolgt dabei vorzugsweise parallel zu den Platten der Gasventileinheit, d. h. senkrecht zu der Bewegungsrichtung der Absperrkörper. Wenn sich der Permanentmagnet über einem Absperrkörper befindet, wird dieser von dem Permanentmagnet angezogen und dabei von der Ventildichtplatte abgehoben.

Weiter weist dieses Auf-Zu-Ventil eine Feder auf, mit der der Absperrkörper des Auf-Zu-Ventils in Richtung zur Ventildichtplatte vorgespannt ist. Die Kraft der Feder definiert eine Ruhestellung des Absperrkörpers und schließt das Auf-Zu-Ventil unabhängig von der Einbaulage der Gasventileinheit. Zum Öffnen des Auf-Zu-Ventils wird der Absperrkörper, beispielsweise mittels der Magnetkraft des Permanentmagnets, entgegen der Kraft der Feder von der Ventildichtplatte abgehoben. Ebenso kann das Öffnen des Auf-Zu-Ventils durch direkte mechanische Kopplung erfolgen, beispielsweise mittels einer Nockenwelle.

Eine zweckmäßige Weiterbildung der Erfindung sieht vor, dass auf der den Absperrkörpern abgewandten Seite der Ventildichtplatte eine aus im Wesentlichen starrem Material, beispielsweise aus Metall ausgeführte Druckplatte angeordnet ist. Die Druckplatte bildet eine ebene Unterlage für die Ventildichtplatte und verhindert eine unerwünschte Verformung, beispielsweise ein Druckbiegen der Ventildichtplatte.

Die Druckplatte weist Öffnungen auf, welche mit den Öffnungen in der Ventildichtplatte korrespondieren. Die Öffnungen in der Druckplatte bilden eine Fortsetzung der Öffnungen in der Ventildichtplatte.

Mit besonderem Vorteil ist zwischen der Druckplatte und der Drosselplatte eine erste Gasverteilungsplatte angeordnet, welche Öffnungen aufweiset, die mit den Öffnungen in der Druckplatte und mit den Drosselöffnungen in der Drosselplatte korrespondieren. Die Gasverteilungsplatte ermöglicht somit eine Durchleitung von Gas von den Öffnungen in der Druckplatte zu den zugeordneten Drosselöffnungen in der Drosselplatte. Zumindest ein Teil der Öffnungen in der ersten Gasverteilungsplatte verbindet zusätzlich jeweils zwei benachbarte Drosselöffnungen der Drosselplatte miteinander. Die Öffnungen in der ersten Gasverteilungsplatte ermöglichen somit nicht nur eine Strömung senkrecht zu der Gasverteilungsplatte sondern auch eine Strömung parallel zur Gasverteilungsplatte, so dass Gas von einer Drosselöffnung der Drosselplatte zu der benachbarten Drosselöffnung der Drosselplatte überströmen kann.

Weiter ist auf der ersten Gasverteilungsplatte abgewandten Seite der Drosselplatte eine zweite Gasverteilungsplatte angeordnet, welche Öffnungen aufweist, die mit den Drosselöffnungen in der Drosselplatte korrespondieren. Es kann damit Gas aus den Drosselöffnungen der Drosselplatte in die Öffnungen der zweiten Gasverteilungsplatte überströmen.

Zumindest ein Teil der Öffnungen in der zweiten Gasverteilungsplatte verbindet jeweils zwei benachbarte Drosselöffnungen der Drosselplatte miteinander. Auch die zweite Gasverteilungsplatte ermöglicht somit ein Überströmen von Gas zwischen zwei benachbarten Drosselöffnungen der Drosselplatte. Die Öffnungen in der zweiten Gasverteilungsplatte können hierzu, ebenso wie die Öffnungen in der ersten Gasverteilungsplatte, als Langlöcher ausgebildet sein.

Die Anordnung der Öffnungen in der zweiten Gasverteilungsplatte ist so gewählt, dass die Öffnungen in der zweiten Gasverteilungsplatte jeweils zwei benachbarte Drosselöffnungen der Drosselplatte miteinander verbinden, die nicht mittels der ersten Gasverteilungsplatte verbunden sind. Die Drosselöffnungen der Drosselplatte sind somit mittels der beiden Gasverteilungsplatten in Reihe geschaltet. Das Gas kann jede der Drosselöffnungen nacheinander durchströmen, wobei die Verbindung zwischen zwei nebeneinander liegenden Drosselöffnungen abwechselnd von der ersten Gasverteilungsplatte und von der zweiten Gasverteilungsplatte hergestellt ist.

Bevorzugt sind die erste Gasverteilungsplatte und/oder die zweite Gasverteilungsplatte aus flexiblem Material, beispielsweise aus Kunststoff ausgeführt. Infolge der Verwendung von flexiblem Material sind die Gasverteilungsplatten gegenüber der Drosselplatte sicher abgedichtet, so dass kein Gas aus der Trennfuge zwischen Gasverteilungsplatte und Drosselplatte austreten kann.

Die Öffnungen der ersten Gasverteilungsplatte sind durch Öffnen des der jeweiligen Öffnung zugeordneten Auf-Zu-Ventils im Wesentlichen ungedrosselt mit einem Gaseingang der Gasventileinheit verbindbar. Die Auf-Zu-Ventile, die Öffnungen in der Ventildichtplatte und die Öffnungen in der Druckplatte besitzen keine ausgewiesene Drosselfunktion und besitzen im Vergleich zu den Drosselöffnungen einen deutlich größeren Durchflussquerschnitt.

Genau eine Öffnung der zweiten Gasverteilungsplatte ist mit einem Gasausgang der Gasventileinheit verbunden. Der gesamte Gasstrom durch die Gasventileinheit durchströmt damit zumindest die letzte Drosselöffnung der Drosselplatte, die in die mit dem Gasausgang verbundene Öffnung der zweiten Gasverteilungsplatte mündet. Die letzte Drosselöffnung der Drosselplatte kann im Vergleich zu den anderen Drosselöffnungen einen besonders großen Querschnitt aufweisen, so dass sie keine oder nur eine geringe Drosselwirkung besitzt. In Abhängigkeit davon, welches Auf-Zu-Ventil geöffnet ist, strömt das die Gasventileinheit durchströmende Gas - nur durch die letzte Drosselöffnung, durch mehrere oder durch alle Drosselöffnungen der Gasventileinheit.

Die Platten des Ventilkörpers der Gasventileinheit sind aufeinander geschichtet. Neben den oben beschriebenen Platten können ggf. weitere Platten vorhanden sein, die beispielsweise als Dichtplatten, als Zwischenplatten oder als Druckplatten ausgeführt sein können.

In montiertem Zustand sind die Platten relativ zueinander nicht bewegbar. Die Einstellung des Gasvolumenstroms erfolgt ausschließlich durch Bewegen der Absperrkörper der Auf-Zu-Ventile. Die Platten sind weder parallel zueinander verschiebbar, noch gegeneinander verdrehbar, noch können sie während des Betriebs voneinander abgehoben werden.

Im Zuge von Umrüstarbeiten an der Gasventileinheit ist zumindest die Drosselplatte austauschbar. Ein Austausch der Drosselplatte kann beispielsweise erforderlich sein, um die Gasventileinheit an den verwendeten Gastyp anzupassen. Üblicherweise verwendete Gastypen sind Erdgas, Flüssiggas oder Stadtgas. Ein Austausch der Drosselplatte ist ebenfalls möglich, wenn die Gasventileinheit an einen Brenner mit größerer oder kleinerer Leistung angepasst werden soll. Die unterschiedlichen Drosselplatten unterscheiden sich durch unterschiedliche Durchflussquerschnitte der verschiedenen Drosselöffnungen.

Gemäß einer vorteilhaften konstruktiven Ausführung der Gasventileinheit sind die Absperrkörper der Auf-Zu-Ventile und/oder die Öffnungen in der Ventildichtplatte und/oder die Öffnungen in der Druckplatte und/oder die Öffnungen in der ersten Gasverteilungsplatte und/oder die Drosselöffnungen in der Drosselplatte und/oder die Öffnungen in der zweiten Drosselplatte jeweils im Wesentlichen auf einer Kreisbahn angeordnet. In diesem Fall wird der Permanentmagnet zur Betätigung der Gasventileinheit mit geringem Abstand oberhalb der Absperrkörper ebenfalls auf einer Kreisbahn bewegt. Der Permanentmagnet kann dann beispielsweise an einem Drehknebel angeordnet sein.

Vorteilhafte Ausgestaltungen und Weiterbildung der Erfindung sind anhand der in den schematischen Figuren dargestellten Ausführungsbeispiele näher erläutert.
- Figur 1: eine schematische Schaltanordnung der Gasventileinheit mit einem ersten geöffneten Auf-Zu-Ventil,
- Figur 2: die schematische Schaltanordnung mit zwei geöffneten Auf-Zu-Ventilen,
- Figur 3: die schematische Schaltanordnung mit dem letzten geöffneten Auf-Zu-Ventil,
- Figur 4: den schematischen Aufbau der Gasventilanordnung mit geschlossenen Auf-Zu-Ventilen,
- Figur 5: den schematischen Aufbau mit einem geöffneten Auf-Zu-Ventil,
- Figur 6: den schematischen Aufbau mit den ersten beiden geöffneten Auf-Zu-Ventilen,
- Figur 7: den schematischen Aufbau mit dem geöffneten Auf-Zu-Ventil,
- Figur 8: den schematischen Aufbau mit dem letzten geöffneten Auf-Zu-Ventil,
- Figur 9: den schematischen Aufbau einer Variante der Gasventileinheit,
- Figur 10: die Gasventileinheit in perspektivischer Ansicht schräg von oben,
- Figur 11: die perspektivische Ansicht mit Blick auf die Auf-Zu-Ventile,
- Figur 12: die Gasventileinheit in perspektivischer Ansicht schräg von unten.
- Figur 13: die perspektivische Ansicht mit Blick auf eine untere Gasverteilungsplatte,
- Figur 14: eine Explosionsdarstellung der Gasventileinheit, schräg von unten,
- Figur 15: eine Variante der Schaltanordnung gemäß Fig. 1-3 in vollständig geschlossenem Zustand,
- Figur 16: die Variante der Schaltanordnung in vollständig geöffnetem Zustand mit einem geöffneten Auf-Zu-Ventil,
- Figur 17: die Variante der Schaltanordnung in vollständig geöffnetem Zustand mit zwei geöffneten Auf-Zu-Ventilen,
- Figur 18: die Variante der Schaltanordnung in teilweise geöffnetem Zustand,
- Figur 19: die Variante der Schaltanordnung in minimal geöffnetem Zustand.

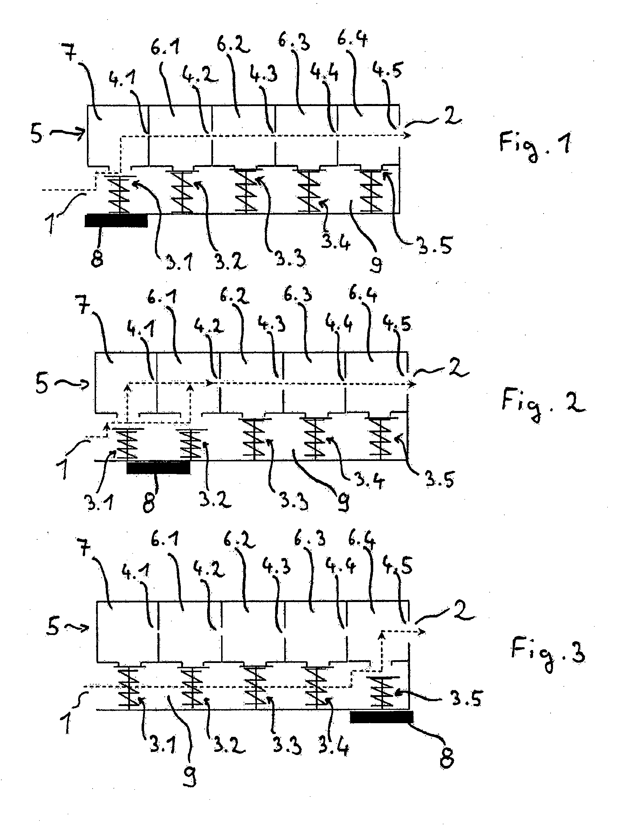

Figur 1 zeigt die Schaltanordnung der erfindungsgemäßen Gasventileinheit. Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck, von beispielsweise 20 Millibar oder 50 Millibar an. An einen Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 9 der Gasventileinheit mit der Eingangsseite der im vorliegenden Ausführungsbeispiel fünf Auf-Zu-Ventile 3 (3.1 bis 3.5) verbunden. Durch Öffnen der Auf-Zu-Ventile 3 ist der Gaseingang 1 jeweils mit einem bestimmten Abschnitt einer Drosselstrecke 5 verbunden, in den das Gas über das geöffnete Auf-Zu-Ventil 3 einströmt. Die Drosselstrecke 5 umfasst einen Eingangsabschnitt 7, in den das erste Auf-Zu-Ventil 3.1 mündet. Die weiteren Auf-Zu-Ventile 3.2 bis 3.5 münden jeweils in einen Verbindungsabschnitt 6 (6.1 bis 6.4) der Drosselstrecke 5. Der Übergang zwischen dem Eingangsabschnitt 7 und dem ersten Verbindungsabschnitt 6.1, sowie die Übergänge zwischen zwei benachbarten der Verbindungsabschnitte 6.1 bis 6.4 ist jeweils von einer Drosselstelle 4 (4.1 bis 4.5) gebildet. Die letzte Drosselstelle 4.5 verbindet den letzten Verbindungsabschnitt 6.4 mit dem Gasausgang 2. Die Drosselstellen 4.1 bis 4.5 besitzen eine der Reihe nach zunehmendem Öffnungsquerschnitt. Der Durchflussquerschnitt der letzten Drosselstelle 4.5 kann so groß gewählt sein, dass die letzte Drosselstelle 4.5 praktisch keine Drosselfunktion besitzt.

Die Betätigung der Auf-Zu-Ventile 3 erfolgt mittels eines Permanentmagnets 8, der entlang der Reihe der Auf-Zu-Ventile 3 verschiebbar ist. Die Kraft zum Öffnen des jeweiligen Auf-Zu-Ventils 3 wird dabei direkt von der Magnetkraft des Permanentmagnets 8 gebildet. Diese Magnetkraft öffnet das jeweilige Auf-Zu-Ventil 3 entgegen einer Federkraft.

In der Schaltstellung gemäß Figur 1 ist ausschließlich das erste Auf-Zu-Ventil 3.1 geöffnet. Durch dieses Auf-Zu-Ventil 3.1 strömt das Gas von dem Gaseingangsraum 9 in den Eingangsabschnitt 7 und passiert von dort aus auf dem Weg zum Gasausgang 2 sämtliche Drosselstellen 4 und sämtliche Verbindungsabschnitte 6. Die Menge des durch die Ventileinheit strömenden Gases gibt die Minimalleistung des an die Gasventileinheit angeschlossenen Gasbrenners vor.

Figur 2 zeigt die schematische Schaltanordnung, bei der der Permanentmagnet 8 derart nach in der Zeichnung rechts verschoben ist, dass sowohl das erste Auf-Zu-Ventil 3.1 als auch das zweite Auf-Zu-Ventil 3.2 geöffnet sind.

Durch das geöffnete zweite Auf-Zu-Ventil 3.2 strömt das Gas von dem Gaseingangsraum 9 direkt in den ersten Verbindungsabschnitt 6.1 und von dort über die Drosselstellen 4.2 bis 4.5 zum Gasausgang 2. Das zum Gasausgang 2 strömende Gas umgeht aufgrund des geöffneten Auf-Zu-Ventils 3.2 die erste Drosselstelle 4.1. Der Gasvolumenstrom in der Schaltstellung gemäß Figur 2 ist deshalb größer als der Gasvolumenstrom in der Schaltstellung gemäß Figur 1. Der Gaszufluss zu dem ersten Verbindungsabschnitt 6.1 erfolgt praktisch ausschließlich über das zweite Auf-Zu-Ventil 3.2. Aufgrund der offen stehenden Auf-Zu-Ventile 3.1 und 3.2 herrscht in dem Eingangsabschnitt 7 dasselbe Druckniveau wie in dem ersten Verbindungsabschnitt 6.1. Aus dem Eingangsabschnitt 7 strömt über die erste Drosselstelle 4.1 deshalb so gut wie kein Gas in den ersten Verbindungsabschnitt 6.1 nach. Der insgesamt durch die Gasventileinheit strömende Gasvolumenstrom ändert sich daher praktisch nicht, wenn der Permanentmagnet 8 weiter nach in der Zeichnung rechts bewegt wird und dadurch das erste Auf-Zu-Ventil 3.1 bei geöffnetem zweiten Auf-Zu-Ventil 3.2 geschlossen wird.

Durch Bewegen des Permanentmagnets 8 nach in der Zeichnung rechts werden die Auf-Zu-Ventile 3.3. bis 3.5 sukzessive geöffnet und dadurch der Gasvolumenstrom durch die Gasventileinheit schrittweise erhöht.

Figur 3 zeigt die schematische Schaltanordnung der Gasventileinheit in maximal geöffneter Stellung. Hierbei befindet sich der Permanentmagnet 8 in seiner Endstellung auf der in der Zeichnung rechten Seite. Das letzte Auf Zu-Ventil 3.5 ist bei dieser Position des Permanentmagnets 8 geöffnet. Gas strömt hierbei direkt aus dem Gaseingangsraum 9 in den letzten Verbindungsabschnitt 6.4 und passiert auf dem Weg zum Gasausgang 2 ausschließlich die letzte Drosselstelle 4.5. Diese letzte Drosselstelle 4.5 kann einen derart großen Durchflussquerschnitt aufweisen, dass praktisch keine Drosselung des Gasstroms eintritt und das Gas die Gasventileinheit praktisch ungedrosselt durchströmen kann.

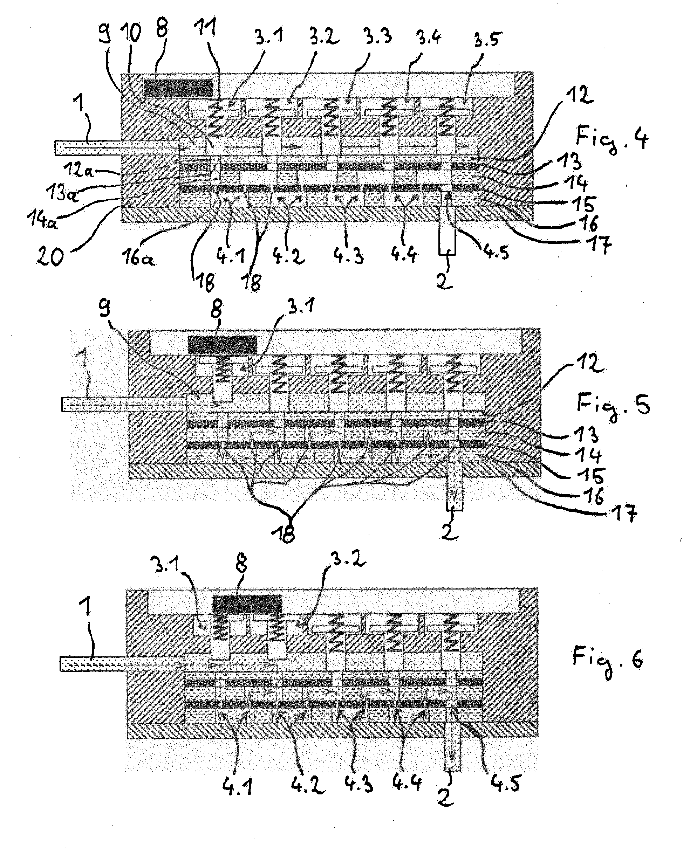

Die Figuren 4 bis 8 zeigen schematisch einen konstruktiven Aufbau einer Gasventileinheit mit einer Schaltanordnung gemäß Figur 1 bis 3. Zu erkennen ist ein Ventilkörper 20, in dem der Gaseingang 1 der Gasventileinheit ausgeführt ist. Im Inneren des Ventilkörpers 20 befindet sich ein mit dem Gaseingang 1 verbundener Gaseingangsraum 9. Absperrkörper 10 der Auf-Zu-Ventile 3 sind in dem Ventilkörper 20 geführt, derart, dass sie sich in der Zeichnung nach oben und unten bewegen können. Jeder Absperrkörper 10 ist mittels einer Feder 11 nach in der Zeichnung unten vorgespannt. Mittels der Kraft des Permanentmagnets 8 kann jeder Absperrkörper 10 entgegen der Kraft der Feder 11 nach in der Zeichnung oben bewegt werden. Die Federn 11 drücken die Absperrkörper auf eine Ventildichtplatte 12, so dass die Absperrkörper 10 in der Ventildichtplatte 12 vorhandene Öffnungen 12a gasdicht verschließen. Unterhalb der Ventildichtplatte 12 ist eine Druckplatte 13 angeordnet, mit Öffnungen 13a, die mit den Öffnungen 12a in der Ventildichtplatte 12 korrespondieren. Die Öffnungen 13a in der Druckplatte 13 münden in Öffnungen 14a in eine erste Gasverteilungsplatte 14. In der Zeichnung unterhalb der ersten Gasverteilungsplatte 14 befindet sich eine Drosselplatte 15 mit einer Vielzahl von Drosselöffnungen 18. Jede der Drosselstellen 4.1 bis 4.4 wird dabei von zwei Drosselöffnungen 18 gebildet. Die zwei zu einer Drosselstelle 4.1 bis 4.4 gehörenden Drosselöffnungen 18 sind jeweils mittels der Öffnungen 16a in einer zweiten Gasverteilungsplatte 16 miteinander verbunden. Die Öffnungen 14a in der ersten Gasverteilungsplatte verbinden hingegen die nebeneinander liegenden Drosselöffnungen 18 zweier benachbarter Drosselstellen 4.1 bis 4.5. Die letzte Drosselstelle 4.5 besteht aus nur einer Drosselöffnung 18, welche über eine korrespondierende Öffnung 16a in der zweiten Gasverteilungsplatte 16 in den Gasausgang 2 der Gasventileinheit mündet.

Bei der Schaltstellung gemäß Figur 4 befindet sich der Permanentmagnet 8 in einer Endposition, in der alle Auf-Zu-Ventile 3 geschlossen sind. Die Gasventileinheit ist damit insgesamt geschlossen. Der Gasvolumenstrom ist gleich null.

Figur 5 zeigt den schematischen Aufbau der Gasventileinheit bei geöffnetem erstem Auf-Zu-Ventil 3.1. Das Gas strömt vom Gaseingang 1 in den Gaseingangsraum 9 und von dort über die jeweils erste Öffnung der Ventildichtplatte 12, der Druckplatte 13 und der ersten Gasverteilungsplatte 14 zur Drosselplatte 15. Auf dem Weg zum Gasausgang 2 durchströmt das Gas alle Drosselöffnungen 18 der Drosselplatte 15 sowie alle Öffnungen 14a der ersten Gasverteilungsplatte 14 und alle Öffnungen 16a der zweiten Gasverteilungsplatte 16.

Figur 6 stellt den schematischen Aufbau mit geöffnetem ersten Auf-Zu-Ventil 3.1 und geöffnetem zweiten Auf-Zu-Ventil 3.2 dar. Infolge des geöffneten zweiten Auf-Zu-Ventils 3.2 sind die Drosselöffnungen 18 der ersten Drosselstelle 4.1 überbrückt, so dass das Gas direkt zur zweiten Drosselstelle 4.2 gelangt und auf dem Weg zum Gasausgang 2 die weiteren Drosselstellen 4.3 bis 4.5 durchströmt. Infolge des geöffneten ersten Auf-Zu-Ventils 3.1 ist der Gasweg über die erste Drosselstelle 4.1 offen. Augrund des gleichen Druckniveaus auf beiden Seiten der ersten Drosselstelle 4.1 strömt durch die erste Drosselstelle 4.1 praktisch kein Gas.

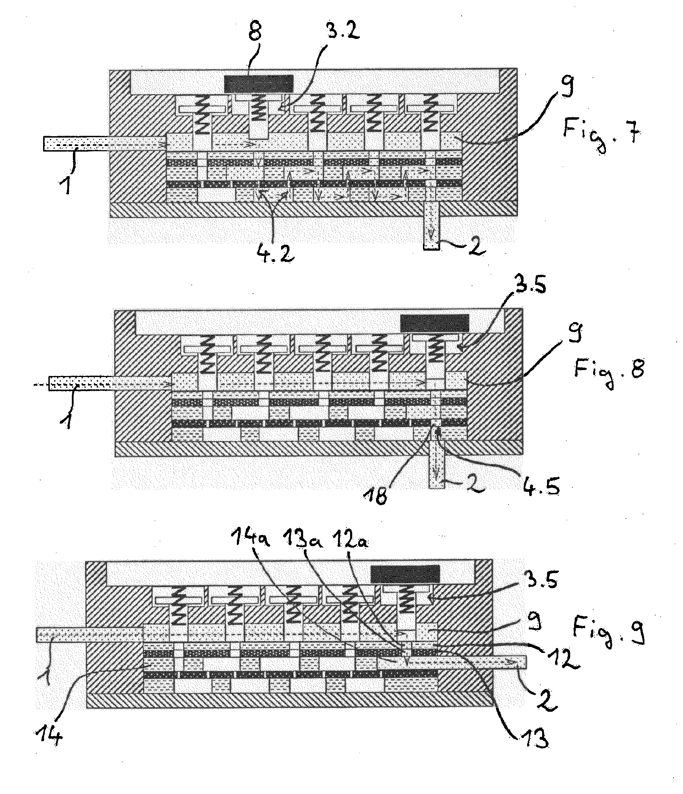

In Figur 7 ist der schematische Aufbau mit geöffnetem zweitem Auf-Zu-Ventil 3.2 dargestellt. Alle übrigen Auf-Zu-Ventile 3.1 und 3.3 bis 3.5 sind geschlossen. Der Gasvolumenstrom durch die Gasventileinheit ist praktisch identisch zu dem Gasvolumenstrom in der Ventilstellung gemäß Figur 6.

Der Permanentmagnet 8 und die Bauteile der Auf-Zu-Ventile 3 sind derart aufeinander abgestimmt, dass bei geöffneter Gasventileinheit entweder genau ein Auf-Zu-Ventil 3 oder genau zwei Auf-Zu-Ventile 3 geöffnet sind. Während des Umschaltens von einem Auf-Zu-Ventil 3 auf ein benachbartes Auf-Zu-Ventil 3 sind kurzzeitig immer beide benachbarte Auf-Zu-Ventile 3 geöffnet. Damit ist sichergestellt, dass ein Umschalten nicht zu einer kurzzeitigen Unterbrechung der Gaszufuhr zu einem Gasbrenner und damit zu einem Flackern oder einem Erlöschen der Gasflammen führt. Mit der oben beschriebenen Schaltung ist ebenfalls sichergestellt, dass während eines Umschaltvorgangs auch keine kurzzeitige Erhöhung des Gasvolumenstroms eintritt. Auch ein Aufflackern der Gasflammen während eines Umschaltvorgangs ist damit sicher verhindert.

Figur 8 zeigt schließlich die schematische Darstellung der Gasventileinheit, wenn ausschließlich das letzte Auf-Zu-Ventil 3.5 geöffnet ist. Das Gas strömt hierbei vom Gaseingang über den Gaseingangsraum, das geöffnete Auf-Zu-Ventil 3.5 und die diesem zugeordnete letzte Drosselöffnung 18 praktisch ungehindert zum Gasausgang.

In Figur 9 ist der schematische Aufbau einer Variante der Gasventileinheit dargestellt. Im Gegensatz zu der Ausführung gemäß Fig. 4 bis 8 zweigt hier der Gasausgang 2 direkt von der ersten Gasverteilungsplatte 14 ab. Bei geöffnetem Auf-Zu-Ventil 3.5 strömt das Gas ungedrosselt über den Gaseingang 1, den Gaseingangsraum 9, das Auf-Zu-Ventil 3.5, die letzte Öffnung 12a in der Ventildichtplatte 12, die letzte Öffnung 13a in der Druckplatte 13 und die letzte Öffnung 14a in der ersten Gasverteilungsplatte 14 zum Gasausgang 2. Die letzte Drosselstelle 4.5 (siehe Fig. 4 bis 8) ist bei der Variante gemäß Figur 9 nicht vorhanden.

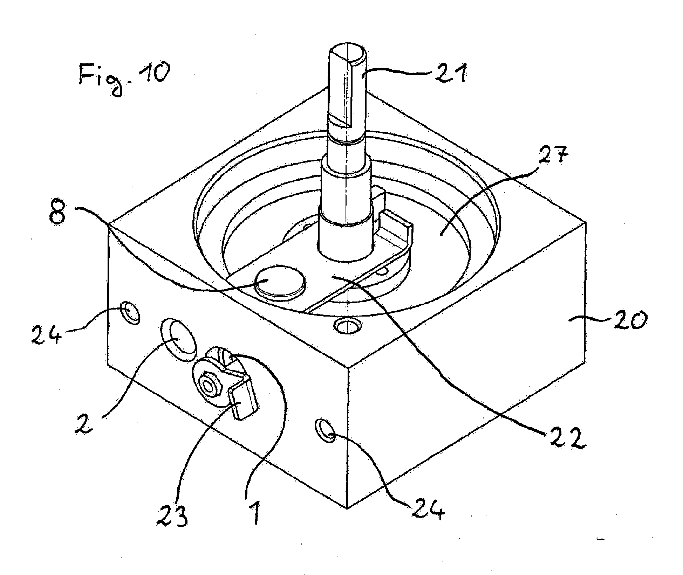

In Figur 10 ist ein Ausführungsbeispiel der Gasventifeinheit in perspektivischer Ansicht schräg von oben dargestellt. Zu erkennen ist ein Ventilkörper 20 in dem eine Schaltwelle 21 der Gasventileinheit drehbar gelagert ist. An die Schaltwelle 21 ist ein Mitnehmer 22 gekoppelt, der eine Drehbewegung der Schaltwelle 21 auf einen Permanentmagnet 8 überträgt, der damit bei einer Drehbewegung der Schaltwelle 21 auf einer Kreisbahn geführt wird. Eine Abdeckung 27 bildet eine Gleitfläche für den Permanentmagnet 8 und stellt einen definierten Abstand zwischen dem Permanentmagnet 8 und den Auf-Zu-Ventilen 3 her. Zu erkennen ist weiter der Gasausgang 2 sowie ein in dem Gaseingang 1 angeordneter Betätigungshebel 23 für eine nicht dargestellte Magnetventileinheit. Der Betätigungshebel 23 ist an die Schaltwelle derart gekoppelt, dass bei einem axialen Drücken der Schaltwelle der Betätigungshebel 23 aus dem Ventilkörper 20 ausfährt. Durch Drücken der Schaltwelle 21 kann damit die Magnetventileinheit geöffnet werden. Bohrungen 24 dienen zur Befestigung der Magnetventileinheit an dem Ventilkörper.

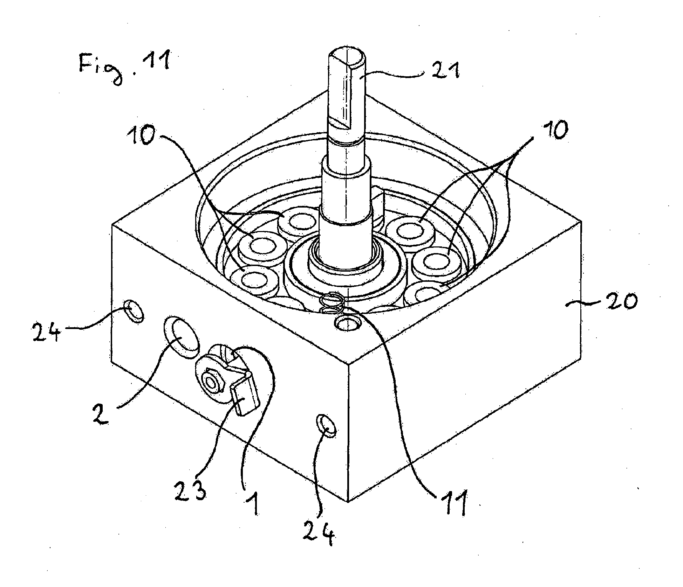

Figur 11 zeigt die Ansicht gemäß Figur 10, unter Weglassung des Mitnehmers 22, des Permanentmagnets 8. Zu erkennen sind in Figur 11 insbesondere die ringförmig angeordneten Absperrkörper 10 der Auf-Zu-Ventile 3. Jedem der Absperrkörper 10 ist eine Feder 11 zugeordnet, die den Absperrkörper 10 nach in der Zeichnung unten drückt. In der Figur 11 ist beispielhaft eine der Federn 11 abgebildet.

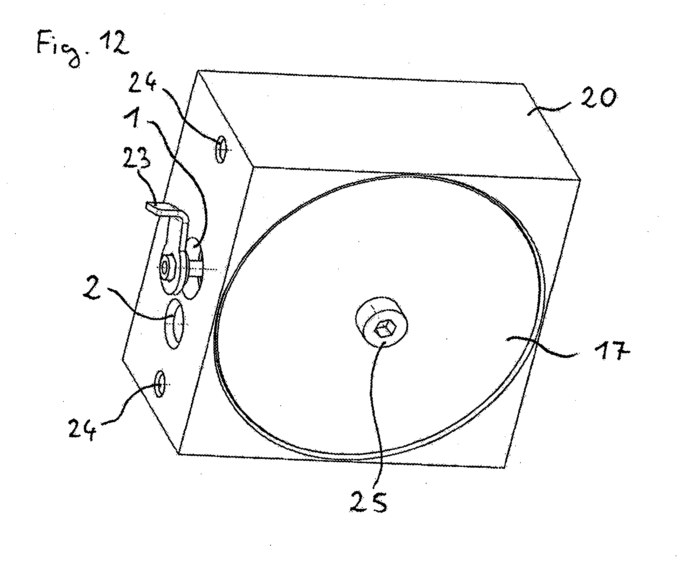

In Figur 12 ist die Gasventileinheit in perspektivischer Ansicht schräg von unten abgebildet. Zu erkennen ist hier insbesondere eine Abschlussplatte 17, welche die in der Figur nicht dargestellten übrigen Platten, die Ventildichtplatte 12, die Druckplatte 13, die erste Gasverteilungsplatte 14, die Drosselplatte 15 und die zweite Gasverteilungsplatte 16 zusammendrückt. Die hierfür erforderliche Kraft wird mittels einer Schraube 25 erzeugt.

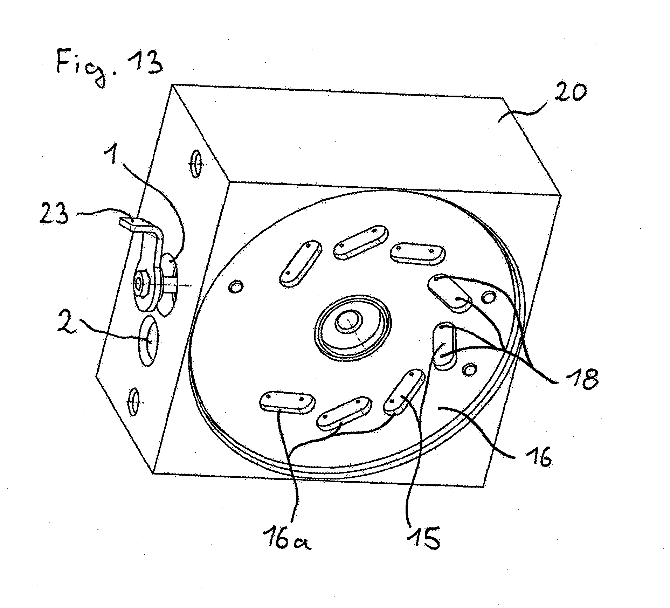

Figur 13 zeigt die Ansicht gemäß Figur 12 mit abgenommener Abschlussplatte 17. Zu erkennen ist hier die zweite Gasverteilungsplatte 16 mit den Öffnungen 16a. Durch diese Öffnungen 16a sind Ausschnitte der Drosselplatte 15 mit den darin befindlichen Drosselöffnungen 18 sichtbar. Zu erkennen ist ebenfalls, dass jeweils zwei Drosselöffnungen 18 über eine Öffnung 16a der zweiten Gasverteilungsplatte 16 verbunden sind.

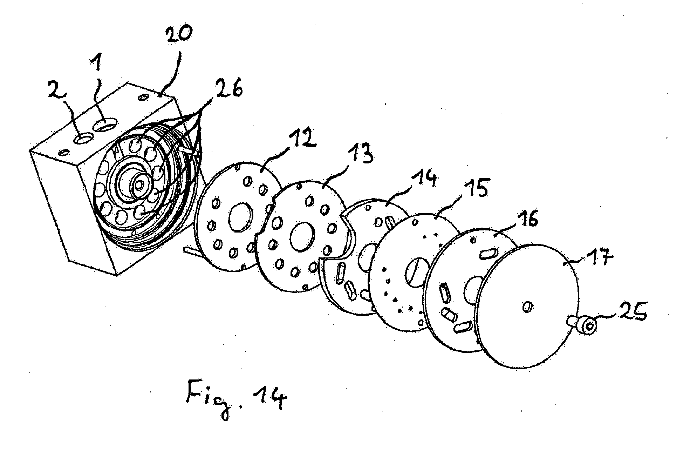

Der schichtweise Aufbau der Gasventileinheit ist anhand Figur 14 mit einer Explosionsdarstellung verdeutlicht. Zu erkennen ist hier der Ventilkörper 20 mit Führungsbohrungen 26 für die in der vorliegenden Ansicht nicht dargestellten Absperrkörper 10 der Auf-Zu-Ventile 3. In den Ventilkörper 20 werden die nachfolgend genannten Platten in folgender Reihenfolge eingesetzt: Ventildichtplatte 12, Druckplatte 13, erste Gasverteilungsplatte 14, Drosselplatte 15, zweite Gasverteilungsplatte 16, Abschlussplatte 17. Die Schraube 25 drückt die sich am Ventilkörper 20 abstützenden Platten 12, 13, 14, 15, 16, 17 aufeinander.

Im vorliegenden Ausführungsbeispiel sind die Platten 12, 13, 14, 15, 16, 17 einzeln in den Ventilkörper 20 eingesetzt. Möglich ist es jedoch auch, die Platten 12, 13, 14, 15, 16, 17 als Paket vorzufertigen, so dass sie nur gemeinsam in den Ventilkörper 20 eingesetzt und wieder entnommen werden können. Zum Umrüsten der Gasventileinheit auf eine andere Gasart muss dann, je nach Bauweise, entweder nur die Drosselplatte 15, oder das gesamte Paket der Platten 12, 13, 14, 15, 16, 17 ausgetauscht werden.

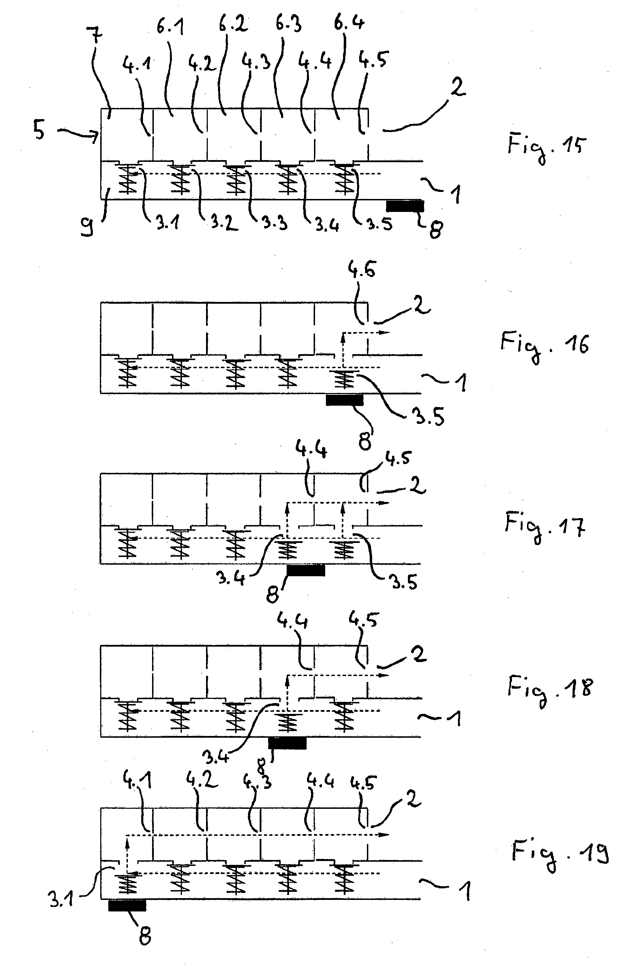

Figur 15 zeigt eine Variante der Schaltanordnung gemäß Figur 1 bis 3. Die Anordnung der Drosselstrecke 5 mit den Drosselstellen 4 (4.1 bis 4.5) entspricht exakt der Anordnung gemäß Figur 1 bis 3. Auch die Anordnung des Gaseingangsraums 9, sowie der Auf-Zu-Ventile 3 (3.1 bis 3.5) entspricht dem Ausführungsbeispiel gemäß Figur 1 bis 3. Im Gegensatz zu dem Ausführungsbeispiel gemäß Figur 1 bis 3 befindet sich der Gaseingang 1 auf der in der Zeichnung rechten Seite des Gaseingangsraums 9. Der Ort des Gaseingangs 1 bezüglich des Gaseingangsraums 9 und damit auch die Strömungsrichtung des Gases innerhalb des Gaseingangsraums 9 sind jedoch für die Funktion der Gasventileinheit weitgehend unerheblich. Innerhalb der Drosselstrecke 5 strömt das Gas, analog zur Anordnung gemäß Figur 1 bis 3, in Richtung von links nach rechts. Folglich wird die in der Zeichnung linke Drosselstelle 4.1 als erste Drosselstelle bezeichnet. Die in der Zeichnung rechte Drosselstelle 4.5 wird als letzte Drosselstelle bezeichnet. Dieser Nomenklatur folgend wird im Folgenden - wie auch in dem Ausführungsbeispiel gemäß Figur 1 bis 3 - das in der Zeichnung linke Auf-Zu-Ventil 3.1 als erstes Auf-Zu-Ventil bezeichnet und das in der Zeichnung rechte Auf-Zu-Ventil 3.5 als letztes Auf-Zu-Ventil.

In der in Figur 15 dargestellten Schaltposition befindet sich der Permanentmagnet 8 rechts von dem letzten Auf-Zu-Ventil 3.5. Der Permanentmagnet 8 übt damit auf keines der Auf-Zu-Ventile 3 eine magnetische Kraft aus, so dass folglich keines der Auf-Zu-Ventile 3.1 bis 3.5 geöffnet ist. Damit ist die Gasventileinheit vollständig geschlossen und die Verbindung zwischen Gaseingang 1 und Gasausgang 2 ist vollständig blockiert.

Um ausgehend von dieser Schaltposition die Gasventileinheit zu öffnen, wird der Permanentmagnet 8 nach links in den Bereich des letzten Auf-Zu-Ventils 3.5 verschoben.

Diese Schaltposition, in der die Gasventileinheit maximal geöffnet ist, ist in Figur 16 dargestellt. Das Gas strömt dabei von dem Gaseingang 1 über das geöffnete letzte Auf-Zu-Ventil 3.5 und die letzte Drosselstelle 4.5 direkt zum Gasausgang 2. Die letzte Drosselstelle 4.5 kann einen derart großen Öffnungsquerschnitt aufweisen, dass praktisch keine Drosselung des Gasstroms erfolgt. In diesem Fall strömt das Gas praktisch ungehindert durch die Gasventileinheit.

Durch Bewegen des Permanentmagnets 8 nach in der Zeichnung links kann der Gasstrom durch die Gasventileinheit nun stufenweise gedrosselt werden. Figur 17 zeigt eine Zwischenstellung des Permanentmagnets 8, in der dieser beide Auf-Zu-Ventile 3.4 und 3.5 öffnet. Der Gasvolumenstrom zum Gasausgang 2 ist hierbei jedoch praktisch identisch zu dem Gasvolumenstrom in der Schaltstellung gemäß Figur 16.

In der Schaltstellung gemäß Figur 18 öffnet der Permanentmagnet ausschließlich das Auf-Zu-Ventil 3.4. Auf dem Weg zum Gasausgang 2 führt der Gasstrom sowohl durch die Drosselstelle 4.4 als auch durch die Drosselstelle 4.5. Der Öffnungsquerschnitt der Drosselstelle 4.4 ist kleiner als der Öffnungsquerschnitt der Drosselstelle 4.5, so dass der Gasstrom etwas gedrosselt wird.

Figur 19 zeigt die Gasventileinheit in minimaler Öffnungsstellung, bei der ausschließlich das Auf-Zu-Ventil 3.1 geöffnet ist. Auf dem Weg zum Gasausgang 2 strömt das Gas durch alle Drosselstellen 4.1 bis 4.5. Die Drosselstellen 4 besitzen, in Gasströmungsrichtung in der Drosselstrecke 5 betrachtet, einen zunehmenden Querschnitt. Somit ist der sich einstellende Gasvolumenstrom maßgeblich durch die Drosselstelle 4.1 bestimmt, die den kleinsten Öffnungsquerschnitt besitzt. Der den Gasvolumenstrom ebenfalls beeinflussende Strömungswiderstand durch die übrigen Drosselstellen 4.2 bis 4.5 ist bei der Auslegung der Öffnungsquerschnitte berücksichtigt.

Bei der Schaltanordnung gemäß Figur 15 bis 19 befindet sich die Gasventileinheit sofort in maximal geöffneter Position, wenn sie ausgehend von ihrer Schließstellung betätigt wird. Dies hat den positiven Effekt, dass sich die der Gasventileinheit nachgeschalteten gasführenden Leitungen und Gasbrenner besonders schnell mit Gas füllen. Darüber hinaus kann ein Zünden des Gasbrenners sofort nach dem Öffnen der Gasventileinheit bei maximalen Gasvolumenstrom erfolgen, wodurch der Zündvorgang erleichtert wird.

### Bezugszeichenliste

- 1: Gaseingang
- 2: Gasausgang
- 3 (3.1 bis 3.5): Auf-Zu-Ventile
- 4 (4.1 bis 4.5): Drosselstellen
- 5: Drosselstrecke
- 6 (6.1 bis 6.4): Verbindungsabschnitt
- 7: Eingangsabschnitt
- 8: Permanentmagnet
- 9: Gaseingangsraum
- 10: Absperrkörper
- 11: Feder
- 12: Ventildichtplatte
- 12a: Öffnungen
- 13: Druckplatte
- 13a: Öffnungen
- 14: erste Gasverteilungsplatte
- 14a: Öffnungen
- 15: Drosselplatte
- 16: zweite Gasverteilungsplatte
- 16a: Öffnungen
- 17: Abschlussplatte
- 18: Drosselöffnungen
- 20: Ventilkörper
- 21: Schaltwelle
- 22: Mitnehmer
- 23: Betätigungshebel
- 24: Bohrungen
- 25: Schraube
- 26: Führungsbohrungen
- 27: Abdeckung

## Patentansprüche

1. Gasventileinheit zum Einstellen eines einem Gasbrenner eines Gasgeräts, insbesondere eines Gaskochgeräts, zugeführten Gasvolumenstroms, wobei die Gasventileinheit einen Ventilkörper (20) aufweist, in welchem Ventilkörper (20) mindestens zwei Ventilsitze von Auf-Zu-Ventilen (3) der Gasventileinheit ausgebildet sind, und in welchem Ventilkörper (20) mindestens zwei Drosselstellen (4) mit jeweils mindestens einer Drosselöffnung (18) ausgebildet sind, wobei der Ventilkörper (20) mehrere parallel zueinander angeordnete Platten (12,13, 14, 15, 16,17) aufweist, wobei eine Ventildichtplatte (12) die Ventilsitze der Auf-Zu-Ventile (3) bildet, **dadurch gekennzeichnet, dass** in einer Drosselplatte (15) aus Metall die Drosselöffnungen (18) der Drosselstellen (4) angeordnet sind, wobei die Drosselöffnungen (18) der Drosselplatte (15) einen exakt definierten Öffnungsquerschnitt aufweisen.

2. Gasventileinheit nach Anspruch 1, **dadurch gekennzeichnet, dass** die Ventildichtplatte (12) aus einem flexiblen Material, beispielsweise aus Kunststoff ausgeführt ist.

3. Gasventileinheit nach Anspruch 1 oder 2, **dadurch gekennzeichnet, dass** jedes Auf-Zu-Ventil (3) einen Absperrkörper (10) aufweist, welcher bei geschlossenem Auf-Zu-Ventil (3) auf der Ventildichtplatte (12) aufsitzt.

4. Gasventileinheit nach Anspruch 3, **dadurch gekennzeichnet, dass** die Ventildichtplatte (12) im Bereich jedes Ventilsitzes eine Öffnung (12a) aufweist, welche bei geschlossenem Auf-Zu-Ventil (3) mittels des auf der Ventildichtplatte (12) aufsitzenden Absperrkörpers (10) verschlossen ist.

5. Gasventileinheit nach Anspruch 3 oder 4, **dadurch gekennzeichnet, dass** die Absperrkörper (10) der Auf-Zu-Ventile (3) mittels der Kraft mindestens eines Permanentmagnets (8) bewegbar sind.

6. Gasventileinheit nach einem der Ansprüche 3 bis 5, **dadurch gekennzeichnet, dass** jedes Auf-Zu-Ventil eine Feder (11) aufweist, mit der der Absperrkörper (10) des Auf-Zu-Ventils (3) in Richtung zur Ventildichtplatte (12) vorgespannt ist.

7. Gasventileinheit nach einem der Ansprüche 3 bis 6, **dadurch gekennzeichnet, dass** auf der den Absperrkörpern (10) abgewandten Seite der Ventildichtplatte (12) eine aus im Wesentlichen starrem Material, beispielsweise aus Metall ausgeführte Druckplatte (13) angeordnet ist.

8. Gasventileinheit nach Anspruch 7, **dadurch gekennzeichnet, dass** die Druckplatte (13) Öffnungen (13a) aufweist, welche mit den Öffnungen (12a) in der Ventildichtplatte (12) korrespondieren.

9. Gasventileinheit nach Anspruch 7 oder 8, **dadurch gekennzeichnet, dass** zwischen der Druckplatte (13) und der Drosselplatte (15) eine erste Gasverteilungsplatte (14) angeordnet ist, welche Öffnungen (14a) aufweist, die mit den Öffnungen, (13a) in der Druckplatte (13) und mit den Drosselöffnungen (18) in der Drosselplatte (15) korrespondieren.

10. Gasventileinheit nach Anspruch 9, **dadurch gekennzeichnet, dass** zumindest ein Teil der Öffnungen (14a) in der ersten Gasverteilungsplatte (14) jeweils zwei benachbarte Drosselöffnungen (18) der Drosselplatte (15) miteinander verbindet.

11. Gasventileinheit nach Anspruch 9 oder 10, **dadurch gekennzeichnet, dass** auf der der ersten Gasverteilungsplatte (14) abgewandten Seite der Drosselplatte (15) eine zweite Gasverteilungsplatte (16) angeordnet ist, welche Öffnungen (16a) aufweist, die mit den Drosselöffnungen (18) in der Drosselplatte (15) korrespondieren.

12. Gasventileinheit nach Anspruch 11, **dadurch gekennzeichnet, dass** zumindest ein Teil der Öffnungen (16a) in der zweiten Gasverteilungsplatte (16) jeweils zwei benachbarte Drosselöffnungen (18) der Drosselplatte (15) miteinander verbindet.

13. Gasventileinheit nach Anspruch 11 oder 12, **dadurch gekennzeichnet, dass** die Öffnungen (16a) in der zweiten Gasverteilungsplatte (16) jeweils zwei benachbarte Drosselöffnungen (18) der Drosselplatte (15) miteinander verbinden, die nicht mittels der ersten Gasverteilungsplatte (14) verbunden sind.

14. Gasventileinheit nach einem der Ansprüche 9 bis 13, **dadurch gekennzeichnet, dass** die Öffnungen (14a) der ersten Gasverteilungsplatte (14) durch Öffnen des der jeweiligen Öffnung (14a) zugeordneten Auf-Zu-Ventils (3) im Wesentlichen ungedrosselt mit einem Gaseingang (1) der Gasventileinheit verbindbar sind.

15. Gasventileinheit nach einem der Ansprüche 12 bis 14, **dadurch gekennzeichnet, dass** genau eine Öffnung (16a) der zweiten Gasverteilungsplatte (16) mit einem Gasausgang (2) der Gasventileinheit verbunden ist.

## Claims

1. Gas valve unit for adjusting a volumetric gas flow supplied to a gas burner of a gas appliance, in particular a gas cooking appliance, the gas valve unit having a valve body (20) in which valve body (20) at least two valve seats of open/close valves (3) of the gas valve unit are embodied, and in which valve body (20) at least two throttle points (4) each having at least one throttle opening (18) are embodied, wherein the valve body (20) has a plurality of plates (12, 13, 14, 15, 16, 17) arranged in parallel with one another, a valve sealing plate (12) forming the valve seats of the open/close valves (3), **characterised in that** the throttle openings (18) of the throttle points (4) are arranged in a throttle plate (15), the throttle openings (17) of the throttle plate (15) having a precisely defined opening cross-section.

2. Gas valve unit according to claim 1, **characterised in that** the valve sealing plate (12) is made from a flexible material, from plastic for example.

3. Gas valve unit according to claim 1 or 2, **characterised in that** each open/close valve (3) has a shut-off body (10) which sits on the valve sealing plate (12) when the open/close valve (3) is in the closed state.

4. Gas valve unit according to claim 3, **characterised in that** in the region of each valve seat the valve sealing plate (12) has an orifice (12a) which is sealed off by means of the shut-off body (10) sitting on the valve sealing plate (12) when the open/close valve (3) is in the closed state.

5. Gas valve unit according to claim 3 or 4, **characterised in that** the shut-off bodies (10) of the open/close valves (3) can be moved by means of the force of at least one permanent magnet (8).

6. Gas valve unit according to one of claims 3 to 5, **characterised in that** each open/close valve has a spring (11) by means of which the shut-off body (10) of the open/close valve (3) is pretensioned in the direction of the valve sealing plate (12).

7. Gas valve unit according to one of claims 3 to 6, **characterised in that** a pressure plate (13) made from substantially rigid material, for example metal, is arranged on the side of the valve sealing plate (12) facing away from the shut-off bodies (10).

8. Gas valve unit according to claim 7, **characterised in that** the pressure plate (13) has apertures (13a) corresponding to the orifices (12a) in the valve sealing plate (12).

9. Gas valve unit according to claim 7 or 8, **characterised in that** a first gas distribution plate (14) is arranged between the pressure plate (13) and the throttle plate (15), which first gas distribution plate (14) has apertures (14a) corresponding to the apertures (13a) in the pressure plate (13) and to the throttle openings (18) in the throttle plate (15).

10. Gas valve unit according to claim 9, **characterised in that** at least some of the apertures (14a) in the first gas distribution plate (14) connect two adjacent throttle openings (18) of the throttle plate (15) to each other in each case.

11. Gas valve unit according to claim 9 or 10, **characterised in that** a second gas distribution plate (16) is arranged on the side of the throttle plate (15) facing away from the first gas distribution plate (14), which second gas distribution plate (16) has apertures (16a) corresponding to the throttle openings (18) in the throttle plate (15).

12. Gas valve unit according to claim 11, **characterised in that** at least some of the apertures (16a) in the second gas distribution plate (16) connect two adjacent throttle openings (18) of the throttle plate (15) to each other in each case.

13. Gas valve unit according to claim 11 or 12, **characterised in that** the apertures (16a) in the second gas distribution plate (16) in each case connect to each other two adjacent throttle openings (18) of the throttle plate (15) which are not connected by means of the first gas distribution plate (14).

14. Gas valve unit according to one of claims 9 to 13, **characterised in that** the apertures (14a) of the first gas distribution plate (14) can be connected substantially unthrottled to a gas inlet (1) of the gas valve unit by opening the open/close valve (3) assigned to the respective aperture (14a).

15. Gas valve unit according to one of claims 12 to 14, **characterised in that** precisely one aperture (16a) of the second gas distribution plate (16) is connected to a gas outlet (2) of the gas valve unit.

## Revendications

1. Unité formant vanne à gaz destinée au réglage d'un débit volumétrique de gaz fourni à un bruleur à gaz d'un appareil au gaz, en particulier d'un appareil de cuisson au gaz, dans laquelle l'unité formant vanne à gaz présente un corps de vanne (20), au moins deux sièges de vanne de vannes tout-ou-rien (3) de l'unité formant vanne à gaz étant réalisés dans ledit corps de vanne (20), et au moins deux emplacements d'étranglement (4) avec respectivement au moins une ouverture d'étranglement (18) étant réalisés dans ledit corps de vanne (20), dans laquelle le corps de vanne (20) présente plusieurs plaques (12, 13, 14, 15, 16, 17) agencées parallèlement les unes par rapport aux autres, dans laquelle une plaque d'étanchéité de vanne (12) forme les sièges de vanne des vannes tout-ou-rien (3), **caractérisée en ce que** les ouvertures d'étranglement (18) des emplacements d'étranglement (4) sont agencées dans une plaque d'étranglement (15) en métal, dans laquelle les ouvertures d'étranglement (18) de la plaque d'étranglement (15) présentent une section de passage strictement définie.

2. Unité formant vanne à gaz selon la revendication 1, **caractérisée en ce que** la plaque d'étanchéité de vanne (12) est réalisée à partir d'un matériau flexible, par exemple à partir de plastique.

3. Unité formant vanne à gaz selon la revendication 1 ou 2, **caractérisée en ce que** chaque vanne tout-ou-rien (3) présente un corps d'obturation (10), qui repose sur la plaque d'étanchéité de vanne (12) lorsque la vanne tout-ou-rien (3) est fermée.

4. Unité formant vanne à gaz selon la revendication 3, **caractérisée en ce que** la plaque d'étanchéité de vanne (12) présente une ouverture (12a) dans le secteur de chaque siège de vanne, ladite ouverture étant fermée au moyen du corps d'obturation (10) reposant sur la plaque d'étanchéité de vanne (12) lorsque la vanne tout-ou-rien (3) est fermée.

5. Unité formant vanne à gaz selon la revendication 3 ou 4, **caractérisée en ce que** les corps d'obturation (10) des vannes tout-ou-rien (3) sont mobiles grâce à la force d'au moins un aimant permanent (8).

6. Unité formant vanne à gaz selon l'une quelconque des revendications 3 à 5, **caractérisée en ce que** chaque vanne tout-ou-rien présente un ressort (11) avec lequel le corps d'obturation (10) de la vanne tout-ou-rien (3) est mis en tension en direction de la plaque d'étanchéité de vanne (12).

7. Unité formant vanne à gaz selon l'une quelconque des revendications 3 à 6, **caractérisée en ce qu'**une plaque d'appui (13) réalisée à partir d'un matériau essentiellement rigide, par exemple à partir de métal, est agencée du côté de la plaque d'étanchéité de vanne (12) qui est détourné des corps d'obturation (10).

8. Unité formant vanne à gaz selon la revendication 7, **caractérisée en ce que** la plaque d'appui (13) présente des ouvertures (13a) qui correspondent avec les ouvertures (12a) de la plaque d'étanchéité de vanne (12).

9. Unité formant vanne à gaz selon la revendication 7 ou 8, **caractérisée en ce qu'**une première plaque de répartition de gaz (14), qui présente des ouvertures (14a) qui correspondent avec les ouvertures (13a) de la plaque d'appui (13) et avec les ouvertures d'étranglement (18) de la plaque d'étranglement (15), est agencée entre la plaque d'appui (13) et la plaque d'étranglement (15).

10. Unité formant vanne à gaz selon la revendication 9, **caractérisée en ce qu'**au moins une partie des ouvertures (14a) de la première plaque de répartition de gaz (14) relie l'une à l'autre respectivement deux ouvertures d'étranglement (18) adjacentes de la plaque d'étranglement (15).

11. Unité formant vanne à gaz selon la revendication 9 ou 10, **caractérisée en ce qu'**une seconde plaque de répartition de gaz (16), qui présente des ouvertures (16a) qui correspondent avec les ouvertures d'étranglement (18) de la plaque d'étranglement (15), est agencée du côté de la plaque d'étranglement (15) qui est détourné de la première plaque de répartition de gaz (14).

12. Unité formant vanne à gaz selon la revendication 11, **caractérisée en ce qu'**au moins une partie des ouvertures (16a) de la seconde plaque de répartition de gaz (16) relie l'une à l'autre respectivement deux ouvertures d'étranglement (18) adjacentes de la plaque d'étranglement (15).

13. Unité formant vanne à gaz selon la revendication 11 ou 12, **caractérisée en ce que** les ouvertures (16a) de la seconde plaque de répartition de gaz (16) relient l'une à l'autre respectivement deux ouvertures d'étranglement (18) adjacentes de la plaque d'étranglement (15) qui ne sont pas reliées au moyen de la première plaque de répartition de gaz.

14. Unité formant vanne à gaz selon l'une quelconque des revendications 9 à 13, **caractérisée en ce que** les ouvertures (14a) de la première plaque de répartition de gaz (14) peuvent être reliées essentiellement sans étranglement à une arrivée de gaz (1) de l'unité formant vanne à gaz par ouverture de la vanne tout-ou-rien (3) associée à l'ouverture (14a) respective.

15. Unité formant vanne à gaz selon l'une quelconque des revendications 12 à 14, **caractérisée en ce qu'**exactement une ouverture (16a) de la seconde plaque de répartition de gaz (16) est reliée à une sortie de gaz (2) de l'unité formant vanne à gaz.
